**Europäisches Patentamt**

**European Patent Office**

**Office européen des brevets**

(19)

(11) Veröffentlichungsnummer: **0 129 896**
**B1**

(12)

# EUROPÄISCHE PATENTSCHRIFT

(45) Veröffentlichungstag der Patentschrift:
**30.03.88**

(21) Anmeldenummer: **84107259.8**

(22) Anmeldetag: **22.06.84**

(51) Int. Cl.⁴: **B 62 D  33/06,** F 16 F  13/00,
F 16 F  9/20

(54) Vorrichtung zum Lagern von Kabinen an Nutzfahrzeugen.

(30) Priorität: **28.06.83  DE 8318702 U**
**18.07.83  DE 8320649 U**

(43) Veröffentlichungstag der Anmeldung:
**02.01.85 Patentblatt 85/1**

(45) Bekanntmachung des Hinweises auf die Patenterteilung:
**30.03.88 Patentblatt 88/13**

(84) Benannte Vertragsstaaten:
**DE GB IT NL**

(56) Entgegenhaltungen:
**FR - A - 1 473 847**
**FR - A - 2 235 311**

(73) Patentinhaber: **EMIL WEBER FABRIK FÜR
ÖLHYDRAULIK GMBH & CO., Heilbronner Strasse 30,
D-7129 Güglingen/Württ. (DE)**

(72) Erfinder: **Aldinger, Heinz, Sonnenrain 29,
D-7129 Güglingen (DE)**

(74) Vertreter: **Säger, Manfred, Dipl.-Ing. et al, Patentanwälte
Dipl.-Ing. Otto Flügel Dipl.-Ing. Manfred Säger
Cosimastrasse 81, D-8000 München 81 (DE)**

## Beschreibung

Die Erfindung betrifft eine Vorrichtung zum Lagern von Kabinen an Nutzfahrzeugen gemäss dem Oberbegriff des Hauptanspruchs.

Bei Nutzfahrzeugen ist es aus Gründen des Fahrkomforts notwendig, die Federung der Kabine auf deren Gewicht und unabhängig von der Federung des gesamten Fahrzeuges abzustimmen. So ist es bekannt geworden, dass Kabinen auf einfache Weise mittels Gummilager an dem Fahrgestell gelagert werden, welche einen geringen Federweg gestatten.

Zur Erzielung eines grösseren Fahrkomforts werden die Gummilager durch Feder-Dämpfungssysteme ersetzt, welche mehr Federweg erlauben. Zusätzlich müssen dann gesonderte Dämpfungsglieder, Anschläge oder dergleichen vorgesehen und eingesetzt werden. Insgesamt besitzen solchermassen gefederte und gedämpfte Kabinen zwar einen grossen Fahrkomfort; sie sind jedoch aufwendig in Herstellung und Montage, weil die Kabine mit gesondert zu verwendenden sowie zu montierenden Elementen zum Lagern, Führen, Federn sowie zum Dämpfen ausgerüstet werden muss.

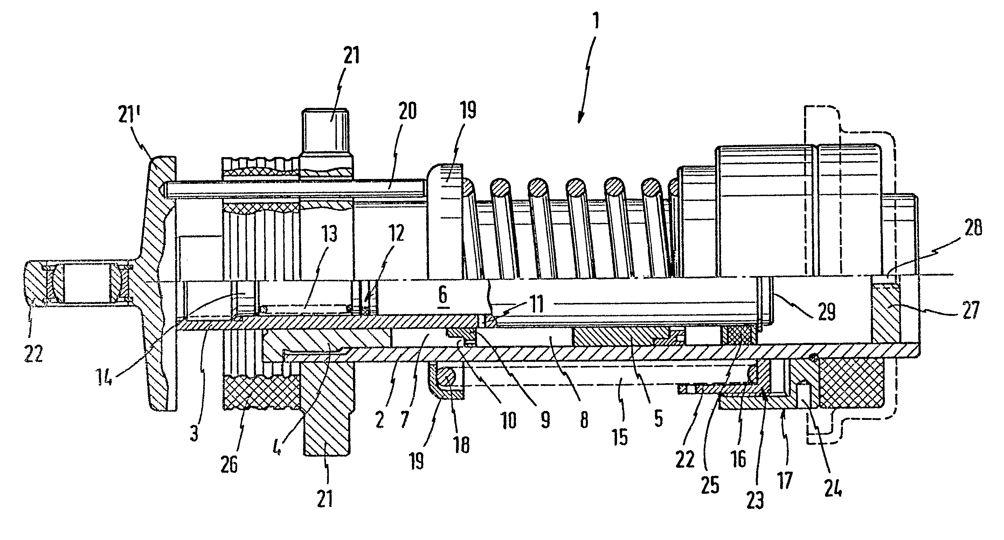

Eine Vorrichtung gemäss dem Oberbegriff ist bekannt (FR-A-1 473 847, Fig. 4).

Der Erfindung liegt die Aufgabe zugrunde, eine Vorrichtung gemäss dem Oberbegriff des Hauptanspruchs so auszugestalten, dass die Federungs- und Dämpfungseingenschaften einstellbar sind.

Diese Aufgabe wird erfindungsgemäss durch den Gegenstand des Hauptanspruchs gelöst.

Bei der erfindungsgemässen Vorrichtung ist durch die Veränderung der Federung und Dämpfung ein universeller Einsatz bei verschiedenen Fahrerhäusern möglich, was die Lagerhaltungskosten ganz beträchtlich senkt. Ausserdem können die Federung und die Dämpfung während der Fahrt geändert werden.

Zweckmässige Ausgestaltungen und Weiterbildungen der Erfindung sind in den Unteransprüchen gekennzeichnet. Insbesondere wird durch die Druckstifte, welche drehfest an dem Zylinder festgelegt sind, sichergestellt, dass die Vorrichtung zu der Kabine immer dieselbe Relativlage beibehält, was von besonderem Vorteil ist.

Ein bevorzugtes Ausführungsbeispiel der Erfindung wird nachfolgend unter Bezugnahme auf die Zeichnung näher erläutert, die einen teilweise ausgebrochenen schematischen Halbschnitt der Erfindung zeigt.

Die insgesamt mit 1 bezeichnete Vorrichtung weist einen hydraulischen Zylinder 2 mit einer darin geführten Kolbenstange 3 auf. Die Kolbenstange 3 ist an zwei voneinander entfernt angeordneten, am Zylinder 2 fest angeordneten Lagern 4, 5 geführt. Die einen Hohlraum 6 aufweisende Kolbenstange 3 ist ferner mit einer zwei Zylinderräume 7, 8 abtrennenden Dichtung 9 versehen, die ein in nur einer Richtung hin öffnendes Rückschlagventil 10 sowie eine die beiden Zylinderräume miteinander verbindende – nicht gezeigte –

Drossel aufweist. Der Hohlraum 6 ist ferner mit einer Querbohrung 11 mit dem einen Zylinderraum 8 verbunden und seinerseits zu dem freien Ende der Kolbenstange 3 hin mit einer Abschlussdichtung 12 versehen die mittels der Kraft einer schraubenförmigen Feder 13 vorgespannt ist, wobei die Federkraft mittels des Schraubteils 14 einstellbar ist.

Konzentrisch um den Zylinder 2 ist eine Schraubenfeder 15 angeordnet, deren eines Ende 16 sich an einem zylinderfesten Widerlager 17 und deren anderes Ende 18 in einem ringförmigen Teller 19 aufgenommen ist, der auf der Aussenseite des Zylinders 2 geführt ist. Auf dem Teller 19 stützen sich drei gleichmässig an dessen Umfang verteilte und an der Aussenseite des Zylinders geführte Druckstifte 20 ab. Diese Druckstifte 20 sind zu diesem Zweck verschieblich durch die Anlenkung 21 für das Fahrgestell des – nicht gezeigten – Nutzfahrzeugs hindurch geführt. Das andere Ende der Druckstifte 20 ist an einem tellerförmigem Teil 21' festgelegt, das auch mit einem Aufnahmeauge 22 zum Angriff an der – nicht gezeigten – Kabine versehen und ist vorzugsweise kraftschlüssig mit der Kolbenstange 3 verbunden.

Das andere Ende 16 der Schraubenfeder 15 liegt in dem tellerringförmig ausgebildeten Hilfskolben 22 eines insgesamt mit 23 bezeichneten Hilfszylinders, der konzentrisch zu dem Zylinder 2 sowie an diesem fest angeordnet ist. Bei Beaufschlagung mit einer Hydraulikflüssigkeit über die Eingangsöffnung 24 kann der Hilfskolben auf der Aussenseite des Zylinders 2 und der Innenseite des Hilfszylinders 23 geführt die Schraubenfeder 15 vorspannen.

An dem in dem Zylinder 2 befindlichen freien Ende der Kolbenstange 3 ist ein elastischer Endanschlag 25 vorgesehen. Ein weiterer Endanschlag 26 ist auf dem dem Boden 27 des Zylinders 2 entgegengesetzten Ende angebracht.

Erfindungsgemäss ist der Boden 27 mit einer Druckmittelanschlussöffnung (28) versehen, an die eine – nicht gezeigte – hydraulische oder pneumatische Druckmittelquelle anschliessbar ist, so dass auf den Querschnitt des Kolbens innenseitigen Bodens 29 der Kolbenstange 3 eine Kraft infolge der Druckbeaufschlagung zur Einwirkung gebracht werden kann, die fest einstellbar oder von den jeweiligen Fahrsituationen steuerbar ist.

## Patentansprüche

1. Vorrichtung zum Lagern von Kabinen an Nutzfahrzeugen, wie Lastkraftwagen oder Traktoren mit einer in einem hydraulischen Zylinder (2) geführten Kolbenstange (3), die von zwei voneinander entfernt angeordneten Lagern (4, 5) geführt ist, und mit einer zwei Zylinderräume (7, 8) abtrennenden Dichtung (9) an der Kolbenstange (3), in der eine Drossel vorgesehen ist, wobei eine Schraubenfeder (15) um den Zylinder herum angeordnet ist, deren eines Ende sich an dem zylinderfesten Widerlager (17) abstützt und deren anderes Ende (18) kraftschlüssig mit der Kolbenstange (3) verbunden ist, wobei die Lager (4, 5) am Zylinder fest unter Wahrung eines bestimmten Abstandes angeordnet sind, dadurch gekennzeichnet dass in der Dichtung (9) ein in nur einer Richtung öffnendes Rückschlagventil (10) angeordnet ist und dass zur Einstellung der Federungs- und/oder der Dämpfungseingenschaften der Boden (27) des Zylinders (2) mit einer Druckmittelanschlussöffnung (28) versehen ist und/oder dass zur Einstellung der Anfangskraft der Schraubenfeder (15) das andere, sich am Zylinder (2) abstützende Ende (16) der Schraubenfeder in seiner Lage zum Zylinder (2) einstellbar ist.

2. Vorrichtung nach Anspruch 1, dadurch gekennzeichnet, dass auf dem dem Boden (27) des Zylinders (2) entgegengesetzten Ende ein erster elastischer Endanschlag (26) vorgesehen ist, an dem das Ende der Kolbenstange (3) zur Anlage kommt.

3. Vorrichtung nach Anspruch 1 oder 2, dadurch gekennzeichnet, dass an dem in dem Zylinder (2) befindlichen freien Ende der Kolbenstange (3) ein zweiter elastischer Endanschlag (25) vorgesehen ist.

4. Vorrichtung nach einem der Ansprüche 1 bis 3, dadurch gekennzeichnet, dass die Kolbenstange (3) einen über eine Querbohrung (11) mit einem der beiden Zylinderräume (7, 8) verbundenen Hohlraum (6) aufweist.

5. Vorrichtung nach Anspruch 4, dadurch gekennzeichnet, dass auf dem aussen liegenden freien Ende der Kolbenstange (3) eine deren Hohlraum (6) verschliessende Abschlussdichtung (12) vorgesehen ist, die mittels der Kraft einer Feder (13) vorgespannt ist.

6. Vorrichtung nach Anspruch 5, dadurch gekennzeichnet, dass die Feder als schraubenförmige Druckfeder (13) ausgebildet ist.

7. Vorrichtung nach einem der Ansprüche 1 bis 6, dadurch gekennzeichnet, dass ein ringförmiger Teller (19) zur Aufnahme des einen Endes der Schraubenfeder (15) vorgesehen ist, dass drei sich darauf abstützende, gleichmässig am Umfang verteilt und an der Aussenseite des Zylinders (2) geführte Druckstifte (20) vorgesehen sind, deren andere Enden an der Kolbenstange (3) festgelegt sind.

8. Vorrichtung nach Anspruch 1, dadurch gekennzeichnet, dass das andere Ende (16) der Schraubenfeder (15) mittels eines hydraulischen oder pneumatischen, einfach wirkenden und konzentrisch zu dem Zylinder (2) angeordneten Hilfszylinder (23) steuerbar ist.

9. Vorrichtung nach Anspruch 8, dadurch gekennzeichnet, dass der Hilfskolben (22) des Hilfszylinders (23) an dem Zylinder (2) und der Innenwandung des Hilfszylinders (23) geführt ist.

10. Vorrichtung nach Anspruch 9, dadurch gekennzeichnet, dass der Hilfskolben (22) tellerringförmig ausgebildet ist und zur Aufnahme des anderen Endes (16) der Schraubenfeder (15) dient.

## Claims

1. Device for mounting cabins on commercial vehicles such as lorries or tractors, comprising, guided in a hydraulic cylinder (2), a piston rod (3) guided by two bearings (4, 5) disposed remotely from each other, and with, separating off two cylinder spaces (7, 8), a gasket (9) on the piston rod (3) in which a throttle is provided, a coil spring (15) being disposed around the cylinder and having one end biased on the abutment (17) which is rigid with the cylinder while the other end (18) is operatively connected to the piston rod (3), the bearings (4, 5) being disposed rigidly on the cylinder while observing a specific spacing, characterised in that disposed in the gasket (9) ist a non-return valve (10) which opens in only one direction and in that in order to adjust the springing and/or damping properties, the bottom (27) of the cylinder (2) is provided with an aperture (28) for the connection of a pressurised medium and/or in that to adjust the initial force of the coil spring (15), the other end (16) of the coil spring which is biased on the cylinder (2).

2. Device according to Claim 1, characterised in that provided on the end opposite the bottom (27) of the cylinder (2) is a first resilient end stop (26) on which the end of the piston rod (3) abuts.

3. Device according to Claim 1 or 2, characterised in that on the free end of the piston rod (3) which is disposed in the cylinder (2) there is a second resilient end stop (25).

4. Device according to one of Claims 1 to 3, characterised in that the piston rod (3) has a cavity (6) connected by a transverse bore (11) to one of the two cylinder spaces (7, 8).

5. Device according to Claim 4, characterised in that on the outer free end of the piston rod (3) there is, occluding the cavity (6), a sealing gasket (12) which is pretensioned by the force of a spring (13).

6. Device according to Claim 5, characterised in that the spring is constructed as a helical thrust spring (13).

7. Device according to one of Claims 1 to 6, characterised in that an annular plate (19) is provided to accommodate one end of the coil spring (15) and in that there are braced thereon and distributed evenly around the periphery, being guided on the outside of the cylinder (2), three thrust pins (20) of which the other ends are fixed on the piston rod (3).

8. Device according to Claim 1, characterised in that the other end (16) of the coil spring (15) can be controlled by means of a hydraulic or pneumatic simply acting auxiliary cylinder (23) which is disposed concentrically of the cylinder (2).

9. Device according to Claim 8, charcterised in that the auxiliary piston (22) of the auxiliary cylinder (23) ist guided on the cylinder (2) and on the inside wall of the auxiliary cylinder (23).

10. Device according to Claim 9, characterised in that the auxiliary piston (22) is shaped like a plate ring and serves to accomodate the other end (16) of the coil spring (15).

## Revendications

1. Dispositif pour la suspension de cabines sur des véhicules utilitaires tels que des camions ou des tracteurs comportant:

— un cylindre hydraulique (2),

— une tige de piston (3) passant dans le cylindre hydraulique (2) et guidée par deux paliers (4, 5) disposés à une certaine distance l'un de l'autre,

— un joint (9) qui délimite deux chambres (7, 8) intérieures au cylindre qui est fixé sur la tige de piston (3) et à l'intérieur duquel est prévu un étrangleur,

— un ressort hélicoïdal (15) étant disposé tout autour du cylindre, l'une des extrémités (16) du dit resssort s'appuyant sur un contre-appui (17) solidaire du dit cylindre et l'autre extrémité (18) étant solidarisée à la tige de piston (3)

— tandis que les paliers (4, 5) sont, tout en maintenant une certaine distance entre eux, fixés sur le cylindre,

ce dispositifs étant CARACTERISE par le fait qu'à l'intérieur du joint (9) est disposé un clapet anti-retour (10) s'ouvrant dans une seule direction et par le fait que, pour régler les propriétés élastiques et/ou d'amortissement, le fond (27) du cylindre (2) est muni d'un orifice (28) pour le raccordement d'un fluide sous pression et/ou par le fait que, pour régler la force initiale du ressort hélicoïdal (15), l'autre extrémité (16) du ressort s'appuyant sur le cylindre (2) est réglable pour ce qui concerne sa position par rapport au dit cylindre (2).

2. Dispositif selon la revendication 1, caractérisé par le fait que sur l'extrémité opposée au fond (27) du cylindre (2) est prévue une première butée élastique (26) de fin de course contre laquelle vient buter l'extrémité de la tige de piston (3).

3. Dispositif selon la revendication 1 ou 2, caractérisé par le fait que sur l'extrémité libre de la tige de piston (3) se trouvant à l'intérieur du cylindre (2) est prévue une deuxième butée élastique (25) de fin de course.

4. Dispositif selon l'une des revendications 1 à 3, caractérisé par le fait que la tige de piston (3) présente un espace creux (6) relié au moyen d'un perçage transversal (11) à l'une des deux chambres intérieures (7, 8) du cylindre.

5. Dispositif selon la revendication 4, caractérisé par le fait que sur l'extrémité libre de la tige de piston (3), située à l'extérieur, est prévu un joint (12) obturant son espace creux (6), ce joint étant placé sous une tension initiale par l'effet d'un ressort (13).

6. Dispositif selon la revendication 5, caractérisé par le fait que le ressort (13) est réalisé sous la forme d'un ressort de compression de forme hélicoïdale.

7. Dispositif selon l'une des revendications 1 à 6, caractérisé par le fait qu'une coupelle de forme annulaire (19) est prévue pour la réception d'une extrémité du ressort hélicoïdal (15) par le fait que sont prévues trois tiges de compression (20) s'appuyant sur ladite extrémité du ressort (15), réparties régulièrement sur le pourtour et passant sur le côté extérieur du cylindre (2), les autres extrémités desdites tiges (20) étant fixées sur la tige de piston (3).

8. Dispositif selon la revendication 1, caractérisé par le fait que l'autre extrémité (16) du ressort hélicoïdal (15) peut être commandée au moyen d'un cylindre auxiliaire (23), hydraulique ou pneumatique, à effet simple et disposé concentriquement au cylindre (2).

9. Dispositif selon la revendication 8, caractérisé par le fait que le piston auxiliaire (22) du cylindre auxiliaire (23) passe le long du cylindre (2) et de la paroi interne du cylindre auxiliaire (23).

10. Dispositif selon la revendication 9, caractérisé par le fait que le piston auxiliaire (22) est réalisé sous la forme d'une coupelle annulaire et sert à recevoir l'autre extrémité (16) du ressort hélicoïdal (15).